(19) Europäisches Patentamt
European Patent Office
Office européen des brevets

(11) **EP 0 950 645 B1**

(12) **EUROPEAN PATENT SPECIFICATION**

(45) Date of publication and mention
of the grant of the patent:
**02.07.2003 Bulletin 2003/27**

(51) Int Cl.⁷: **C04B 20/00**, C04B 16/06,
D01F 6/14

(21) Application number: **99107189.5**

(22) Date of filing: **13.04.1999**

(54) **Reinforcing material for kneaded and formed hydraulic material, and kneaded and formed article**

Verstärkungsmaterial für geknetetes und geformtes hydraulisches Material sowie gekneteter und geformter Gegenstand

Matériau de renforcement pour matériau hydraulique malaxé et moulé et article malaxé et moulé

(84) Designated Contracting States:
**AT CH DE DK FR GB IT LI**

(30) Priority: **13.04.1998 JP 10074698**
**04.06.1998 JP 15570798**

(43) Date of publication of application:
**20.10.1999 Bulletin 1999/42**

(73) Proprietor: **Kuraray Co., Ltd.**
**Okayama-Pref. (JP)**

(72) Inventors:
 • **Mayahara, Mitsuo**
 **Kurashiki-City, Okayama-Pref. (JP)**
 • **Suemori, Hisashi**
 **Kurashiki-City, Okayama-Pref. (JP)**
 • **Ikimine, Toshiaki**
 **Kurashiki-City, Okayama-Pref. (JP)**
 • **Hikasa, Jun-ichi**
 **Kurashiki-City, Okayama-Pref. (JP)**
 • **Saito, Tadashi**
 **Kurashiki-City, Okayama-Pref. (JP)**
 • **Ogawa, Atsuhisa**
 **Kurashiki-City, Okayama-Pref. (JP)**
 • **Ohmory, Akio**
 **Kurashiki-City, Okayama-Pref. (JP)**
 • **Satoh, Masahiro**
 **Kurashiki-City, Okayama-Pref. (JP)**

(74) Representative: **VOSSIUS & PARTNER**
**Siebertstrasse 4**
**81675 München (DE)**

(56) References cited:
 EP-A- 0 220 649      EP-A- 0 271 825
 EP-A- 0 286 112      EP-A- 0 313 068
 EP-A- 0 535 373      US-A- 4 599 267

 • PATENT ABSTRACTS OF JAPAN vol. 013, no.
 367 (C-626), 15 August 1989 & JP 01 122943 A
 (TEZATSUKU:KK), 16 May 1989

**Description**

The present invention relates to a reinforcing material for a kneaded and formed hydraulic material, and a kneaded and formed article.

It has been conventionally investigated to use fibers as a reinforcing material for a hydraulic material, such as cement and gypsum.

For example, JP-A-54-31421 discloses a fiber-reinforced paper-manufactured cement plate mixed with polyvinyl alcohol based fibershaving a fineness of from 15 to 25 d, a strength of 9 g/d or more, and an elongation of from 5 to 10%. In the case where a paper-manufacturing method is employed, in which a slurry comprising fibers and a hydraulic material dispersed in water is paper-manufactured, the fibers are two-dimensionally oriented in the direction extending the formed article, to effectively exhibit the reinforcing effect. However, in the case where a kneading and forming method is employed, in which the fibers are blended in a matrix and are uniformly mixed, since the fibers are three-dimensionally and randomly dispersed, it is difficult to exhibit sufficient reinforcing effect practically and therefore to obtain a kneaded and formed article having a high toughness.

JP-A-56-125269 discloses a paper-manufactured cement plate and a kneaded and formed article using PVA based fibers having a fineness of from 1 to 4 d, a strength of from 8 to 9 g/d, and an elongation of from 5 to 6%. Although a paper-manufactured formed article obtained by this method has excellent performance, when the kneading and forming method is conducted, problems such as formation of fiber balls occur due to the small diameter of the fibers, and the sufficient reinforcing effect cannot be exhibited.

JP-A-59-8664 discloses a hardened hydraulic article obtained by kneading and forming with PVA based fibers having a fineness of from 100 to 1,000 d and an aspect ratio of from 30 to 150, and JP-A-63-303837 discloses that obtained by kneading and forming with PVA based fibers having a fineness of from 1,000 to 9,000 d and an aspect ratio of from 20 to 150, which shows that fibers having a high tenacity and a high modulus of elasticity. However, when only fibers having a high tenacity and a high modulus of elasticity are simply used, or the adhesion to the matrix is increased, the toughness of the kneaded and formed article cannot sufficiently be improved because when a bending stress is applied to the kneaded and formed article, the PVA fibers have a tendency in that the fibers are broken before the fibers exhibit their inherent strength.

An object of the present invention is to provide a reinforcing material for a kneaded and formed hydraulic material, and a kneaded and formed article comprising a hydraulic material that are considerably improved in uniform dispersibility and reinforcing effect, and an other object of present invention is to provide a kneaded and formed article not only delaying the formation of the first crack, but also exhibiting a high stress even after the formation of the first crack.

The invention relates to

(1) A reinforcing material for a kneaded and formed hydraulic material comprising fibers having a fineness of 5 d or more, an aspect ratio of from 10 to 500, a breaking tenacity of 5 g/d or more, an elongation (A) of from 6 to 20%, a flexing tenacity utilization factor (B) of 35% or more, and (B) ≥ 4(A);
(2) The reinforcing material as claimed in (1), wherein said fibers are polyvinyl alcohol based fibers;
(3) The reinforcing material as claimed in (1) or (2), wherein said fibers have a fineness of from 300 to 6,000 d and an aspect ratio of from 35 to 100;
(4) The reinforcing material as claimed in (1) or (2), wherein said fibers have a fineness of from 5 to 100 d and an aspect ratio of from 20 to 500;
(5) A kneaded and formed article comprising a hydraulic material having three-dimensionally and uniformly dispersed therein, followed by forming, a reinforcing material comprising fibers having a fineness of 5 d or more, an -aspect ratio of from 10 to 500, a breaking tenacity of 5 g/d or more, an elongation (A) of from 6 to 20%, a flexing tenacity utilization factor (B) of 35% or more, and (B) ≥ 4(A);
(6) The kneaded and formed material as claimed in (5), wherein said fibers are polyvinyl alcohol based fibers;
(7) The kneaded and formed material as claimed in (5) or (6), wherein said fibers have a fineness of from 300 to 6,000 d and an aspect ratio of from 35 to 100; and
(8) The kneaded and formed material as claimed in claim 5 or 6, wherein said fibers have a fineness of from 5 to 50 d and an aspect ratio of from 20 to 500.

When a hydraulic material is kneaded and formed, a fiber reinforcing material is three-dimensionally and randomly dispersed in a matrix. When a bending stress is applied to the formed article, fibers oriented in the directions similar to the tensile direction (fiber group a) easily exhibit the reinforcing effect, while fibers oriented in the directions different from the tensile direction and fibers in bent condition (fiber group b) involve a problem in that they tend to break before they sufficiently exhibit the performance of the fibers.

In particular fibers oriented in the directions making a large angle with respect to the tensile direction are higher in this tendency.

When stress is applied to the fiber group b, the tensile direction and the tensile stress are not uniform within one fiber, but the stress is concentrated at a certain part. The fibers(particularly PVA based fibers) have a tendency to be weak against a bending stress, or the tensile breaking tenacity under a bent condition, and thus they are easily broken without sufficiently exhibiting a sufficient reinforcing effect. Therefore, when a hardened hydraulic article mixed with reinforcing material is broken by tensile stress, it is observed that many fibers oriented in the directions different from the tensile direction of the hardened article are broken on the rupture cross section.

Only the behavior of the fiber group a has been intensively studied, and it has been considered that highly drawn fibers having a high tenacity and a low elongation are preferred. In the present invention, on the other hand, the inventors have found that it is necessary to investigate not only the behavior of the fiber group a but also that of the fiber group b in order to obtain an excellent reinforcing effect in a kneaded and formed article, and have reached the specific range of the elongation and the flexing tenacity utilization factor.

Specifically, the invention uses fibers having an elongation (A) of from 6 to 20%, a flexing tenacity utilization factor (B) of 35% or more, and (B) $\geq$ 4(A), as a reinforcing material. Such a reinforcing material exhibits an excellent reinforcing effect in not only the fiber group a but also the fiber group b, and the toughness of the formed article is considerably improved by using these fibers. When the elongation and the flexing tenacity utilization factor are outside the ranges described above, a sufficient reinforcing effect cannot be obtained in a system, in which the fiber reinforcing material is uniformly dispersed in a matrix.

So far only the reinforcing effect of the fiber group a has been studied, and fibers having a high tenacity and a low elongation have been used for improvement of the reinforcing effect of the fiber group a. However there is a tendency that the lower the elongation of the fiber, the lower the flexing tenacity utilization factor of the fiber. And thus while the fiber group a exhibits an excellent reinforcing effect, the fiber group b does not exhibit a sufficient reinforcing effect. In the present invention, by increasing the flexing tenacity utilization factor of the fibers, the reinforcing effect of the fiber group b, which has substantially not been exhibited, is greatly improved, and as a result, the toughness of the formed article is considerably improved.

Specific means for improving the flexing tenacity utilization factor of the fiber group b are not particularly limited, a method of increasing the elongation of the fibers can be preferably employed because there is a tendency that when the elongation is increased, the flexing tenacity utilization factor also increases. The reinforcing effect of the fiber group a is decreased by making the elongation large because it becomes liable to be pulled out from the matrix. However the fiber having the elongation and the flexing tenacity utilization factor within the ranges defined in the present invention exhibit an excellent reinforcing effect as a result because the reinforcing effect of the fiber group b, which has been substantially not exhibited, is greatly improved though the reinforcing effect of the fiber group a is somewhat lowered.

In the present invention, the flexing tenacity utilization factor (B) is necessarily 35% or more, preferably 40% or more, more preferably 45% or more, and particularly preferably 50% or more. When the flexing tenacity utilization factor is too small, the fiber group b is easily broken, and the reinforcing effect becomes insufficient.

When the flexing tenacity utilization factor is too high, there is a tendency that the reinforcing effect of the fiber group a is decreased. In addition it is practically difficult to increase the flexing tenacity utilization factor above a certain range. Thus the flexing tenacity utilization factor is preferably 80% or less, more preferably 70% or less, and particularly preferably 65% or less.

The flexing tenacity utilization factor referred in the present invention, which is a value that can be an index of the reinforcing performance of the fiber group b, can be measured by the method described in the examples.

The elongation (A) is necessarily from 6 to 20%, and preferably 7% or more, and it is preferably 15% or less, more preferably 14% or less, and particularly preferably 13% or less. When the elongation is too high, the fiber group a is easily pulled out from the matrix, and the reinforcing effect of the fiber group a is substantially not exhibited, and the toughness of the kneaded and formed article is decreased. When the elongation is too low, the reinforcing effect of the fiber group b is substantially difficult to be exhibited, and thus the desired effect cannot be obtained.

The flexing tenacity utilization factor of fibers is not always determined by the elongation but depend on the species of the fibers, the production process of the fibers, the fineness and the polymerization degree of the polymer constituting the fibers and so on. Therefore, even if two kinds of fibers have the same elongation, they may have different values in flexing tenacity utilization factor. However, because the elongation is one of the important factors determining the flexing tenacity utilization factor, when the elongation is too low, the fiber group b is difficult to exhibit a sufficient reinforcing effect. Because highly stretched fibers having a low elongation are stiff and have low flexibility, when a stress is applied to the direction different from the longitudinal direction of the fibers as in the fiber group b, it is difficult to exhibit a sufficient mechanical performance and reinforcing effect. While the reinforcing effect of the fiber group a tends to be lowered by increasing the elongation, particularly considerable reinforcing effect can be obtained by determining the elongation within a certain range even though the reinforcing effect of the fiber group a is somewhat decreases.

In the invention, the elongation (A) and the flexing tenacity utilization factor (B) necessarily satisfy (B) ≥ 4(A). That is, when the elongation (A) is made high, the reinforcing effect of the fiber group a is lowered as explained above, and thus the lowering of the reinforcing effect of the fiber group a must be compensated with the reinforcing effect of the fiber group b. Therefore, when the elongation is higher, the flexing tenacity utilization factor (B) must be higher, and specifically the flexing tenacity utilization factor (B) is preferably 4.5 times or more, more preferably 6 times or more, as large as the elongation (A). From the standpoint of the practical performance of the fibers, they particularly preferably satisfy (B) ≤ 15(A).

In the invention, the breaking tenacity of the fiber is necessarily 5 g/d or more, and preferably 6 g/d or more. When the breaking tenacity is too low, a sufficient reinforcing effect cannot be exhibited by either the fiber group a nor the fiber group b. From the standpoint of the production cost of the fibers, it is preferably 30 g/d or less, and more preferably 20 g/d or less. The Young's modulus of the fibers is preferably 150g/d or more, and more preferably 200 g/d or more, and from the standpoint of the production cost, it is preferably 500 g/d or less.

Since the reinforcing material of the invention is subjected to kneading and forming, the fibers must be excellent in uniform dispersibility. In view of these factors, the fibers have fineness of 5 d or more, preferably 10 d or more, and more preferably 12 d or more, an aspect ratio (AP value) of 10 or more, and preferably 20 or more, and the aspect ration is 500 or less, preferably 400 or less.

When the fineness is too small or the aspect ratio is too large, the uniform dispersibility becomes insufficient, and a sufficient reinforcing effect cannot be obtained due to the formation of fiber balls during kneading. On the other hand, when the aspect ratio is too small, the reinforcing effect is insufficient since the specific surface area is too small to make adhesion to the matrix sufficient, and a bridging effect cannot be obtained.

The fineness can be adjusted by changing the diameter of the spinning nozzle and the draw ratio, and is preferably 9,000 d or less, and particularly preferably 6,000 d or less, from the standpoint of adhesion to the matrix. The aspect ratio (AP value) referred in the invention means a value obtained by dividing the length of the fiber by the diameter of the fiber (the diameter of the circle having-the same area as the transversal cross section of the fiber).

The reinforcing material of the invention may be bundle thread obtained by bundling plural pieces of fibers, but from the standpoint of the efficiency of the production process and the production cost, single fibers are preferably used as the reinforcing material without bundling.

In the case where it is an object that the uniform mixability of the fibers is increased and the formation of the first crack is suppressed, the fineness is preferably from 300 to 6,000 d, and particularly preferably from 3,000 to 5,000 d, and the aspect ratio is preferably 35 or more, and particularly preferably 40 or more, and is preferably 100 or less, and particularly preferably 80 or less. By using such fibers, the formation of the first crack is suppressed, and the toughness of the formed article is considerably improved. The addition amount of the fibers is. preferably from 0.2 to 2% by volume.

While the fibers exhibit excellent uniform dispersibility, they are liable to be pulled out in the case of fiber group a because of low adhesion to the matrix due to their small specific surface area. Thus, the elongation is preferably set relatively low within the range of the invention. Specifically, the elongation is preferably 7% or more, and is preferably 13% or less, more preferably 12% or less, and particularly preferably 10% or less.

When improving the impact resistance after the formation of the first crack is an object, the fineness is preferably from 5 to 100 d, and the aspect ratio is preferably from 20 to 500. In particular, the fineness is preferably 10 d or more, and more preferably 12 d or more, and is preferably 50 d or less, and more preferably 30 d or less.

The aspect ratio is preferably from 20 to 500. It is more preferably 60 or more, further preferably 70 or more, and particularly preferably 80 or more, and is more preferably 400 or less, further preferably 300 or less, and particularly preferably 200 or less. By using such fibers as the reinforcing material, not only the reinforcing effect of the fiber group b is considerably improved, but also the transmission of the stress is easily conducted. Thus, not only the formation of the first crack is suppressed, but also the lowering of the bending load of the hardened article after the formation of the first crack is suppressed, to obtain a kneaded and formed article excellent in impact resistance. When the fineness of the fibers are large, effective transmission of the stress on the fibers are difficult due to the small specific area and the number of fibers are small. Thus the impact resistance after the first crack is not considerably improved compared to the small diameter of the fibers although the formation of the first crack is effectively suppressed. Therefore, in the case where the impact resistance of the formed article should be improved, it is preferred to mix fibers having a small diameter.

When the fiber group b break due to localization of stress, or when the bridging effect is not sufficient due to low tensile strength or low frictional resistance, multiple cracking does not occur. As for cracking on the bending test, it is preferred that many cracks (multiple-cracking) are formed on the tensile side. In the case where both the fiber group a and fiber group b exhibit the reinforcing effect, not only the formation of the first crack is suppressed, but also impact strength is improved because of stress dispersion prior to fiber breakage resulting generation of bridging effect by many other fibers. While there is a limit in fiber tenacity of one fiber, because the number of fibers can be increased in the case of fibers having a small diameter, the progress of the first crack is prevented by improvement in integration of many pieces of tenacity exhibiting distribution in demoldation distortion, and cracks are formed in the other regions of the matrix to form multi-crack. An article which breaks in such a process is excellent in impact resistance and seismic resistance. From the standpoint of improvement in seismic resistance, it is preferred to increase the number of reinforcing fibers, and they are preferably added in an amount of from 1 to 4% by volume.

A fine fiber has a lower absolute strength(g) (not normalized to g/d by dividing by fineness) due to its small diameter compared to a coarse fiber, so bridging effect of such a fiber depends on tenacity to a certain extent. Therefore a fine fiber preferably has a higher breaking tenacity (g/d) than a coarse fiber. Specifically, it preferably has 9 g/d or more, more preferably 10 g/d or more, and particularly preferably 11 g/d or more. The upper limit is not particularly set, and is generally 30 g/d or less.

Specifically, when a deflection, at which the first crack is formed on conducting a bending test, is assumed A mm, and a bending load at that time is assumed B kgf, the deflection, at which the bending load becomes B kgf after formation of the first crack, is preferably 11A mm or more, more preferably 12A mm or more, further preferably 13A mm or more, and particularly preferably 15A mm or more. Such a hardened article is excellent in impact strength because the article keeps the bending load at high value even after first crack. The upper limit of the amount of the deflection, at which the bending load becomes B kgf, is not particularly limited, and is generally 30A mm or less.

While the specific value of the bending load changes depending on the shape, size and composition of the hardened article, it is preferred that the load at the formation of the first crack is 100 kgf or more, and particularly 150 kgf or more, and it is also preferred that the bending load becomes larger after the formation of the first crack. The maximum bending load is preferably 1.2 times or more, more preferably 1.5 times or more, and particularly preferably 1.6 times or more, the load at the formation of the first crack, and it is generally 5 times or less.

The point of the formation of the first crack referred in the present invention means the point at which the load exhibits the maximum value as far as the load and the deflection exhibit a proportional relationship on the bending load-deflection curve.

A further considerable effect can be obtained when the pull-out resistance as an index of bonding (affinity) between the fiber and the matrix exhibits from 1 to 10 N/mm$^2$ and preferably from 2 to 9 N/mm$^2$. By controlling the bond within an adequate range at which a fiber can not be pulled out so easily, but a fiber can move to some extent, stress can be dispersed easily due to the freeness of a bent fiber and breakage of a fiber before stress dispersion does not occur easily. Therefore, the reinforcing effect of the fiber group b is increased by the above means in synergy with improvement of flexing tenacity of the fibers. This tendency is increased particularly in the case of fibers of 100 d or less.

The affinity of the fibers and the matrix is preferably controlled by selecting their species, and in some cases, their affinity is preferably decreased. For example, PVA based fibers having a fineness of 100 d or less have high affinity to a hydraulic material and exhibits an excellent reinforcing effect as the fiber group a, but as in the fiber group b, a stress is concentrated at a part since the fibers are firmly adhered to the matrix, a problem arises in that they are liable to be broken before the stress is dispersed. However, a further excellent effect can be obtained by suitably decreasing the affinity to the hydraulic material.

Specific means for decreasing the affinity to the hydraulic material include applying or coating a hydrophobic substance, such as an epoxy resin, a polyolefin resin, a polyethyleneoxide resin and a fluorine based compound. PVA having been modified with a hydrophobic group may be applied to the surface of the fibers. The attached amount to the fibers is preferably about from 0.1 to 10% by weight. In the case where fibers exhibiting a low pull-out resistance (fibers having high hydrophobic property) are employed, on the other hand, the bond of fibers to the matrix can be increased by chemical methods, such as activating the fiber surface using plasma treatment at a low temperature, or by geometrical demolding, such as etching and indentation.

The species of the reinforcing fibers used in the invention are not particularly limited, and are preferably polyvinyl alcohol (PVA) based fibers from the standpoint of weather resistance, mechanical performance and alkali resistance.

In the case where the affinity between the PVA based fibers and the hydraulic material is decreased, this is preferably controlled by applying a polyethyleneoxide resin. The polyethyleneoxide resin has high affinity with the PVA based resin and has a moderate affinity with the hydraulic material, and thus good result can be obtained.

The PVA based fibers used in the invention are not particularly limited as far as they satisfy the values mentioned above. The vinyl alcohol based polymer constituting the PVA based fibers preferably has an average degree of polymerization obtained by the viscosity method in an aqueous solution at 30 °C of from 500 to 24,000, more preferably 1,000 or more, and particularly preferably 1,500 or more. By using such PVA, PVA fibers having a high modulus of elasticity can be easily obtained. In view of the cost, it is preferably 5,000 or less.

The saponification degree is preferably 99% or more, and more preferably 99.8% or more, from the standpoint of heat resistance, durability and dimensional stability. PVA to which other modification units are introduced can also be used. The introduction of the modification unit can be conducted by either copolymerization or post-polymerization. The amount of the modification unit is preferably 30% by mol or less, and more preferably 10% by mol or less.

The reinforcing fibers are not necessarily composed of only the vinyl alcohol based polymer, but other additives and other polymers may be mixed, and it may be conjugated fibers or sea-island fibers with other polymers. It is more preferred that PVA having high weathering resistance and alkali resistance is present on the surface of the fibers.

The production process of the PVA based fibers suitably used in the invention are not particularly limited, and the fiber can be produced by the wet spinning method, the dry spinning method, and the dry and wet spinning method. The dry spinning method is a method in which spinning is conducted with providing a space (air gap) filled with air or an inert gas between the spinning nozzle and the coagulation bath.

The shape of the hole of the nozzle is not particularly limited, and may be circular or have other profiles. Examples thereof include a flat form, a cross-shaped form, a T-shaped form, a Y-shaped form, an L-shaped form, a triangle form, a square form and a star-shaped form.

In the case where fibers having a fineness of 500 d or more are produced, because it is difficult to remove water from a thick stream of a spinning solution (wet spinning), when an aqueous solution of a vinyl alcohol based polymer is used as a spinning solution, spinning is preferably conducted by the dry spinning. Specific examples include a method in which a spinning solution comprising a PVA aqueous solution having a PVA concentration of from 30 to 50% by weight is extruded from a spinning nozzle into a gas. Air is generally used as the gas, and the temperature of the gas is generally from 60 to 90°C. A spinning base thread can be produced by drying the resulting thread at a temperature preferably from 100 to 200°C.

In the case where fibers having a fineness of less than 500 d are produced, the fiber are preferably produced by the wet spinning method or the dry and wet spinning method.

Specific examples include a method in which a spinning solution comprising an aqueous solution containing PVA is wet-spun into a coagulation bath at room temperature containing an inorganic salt having a dehydration function. The concentration of the PVA based polymer in the spinning solution is preferably from 5 to 30% by weight, and more preferably from 10 to 20% by weight, depending on the degree of polymerization thereof.

Other additives can also be added thereto depending on necessity. For example, one or more of surface active agent or inorganic substance may be added to the spinning solution to increase the life of the spinning nozzle and to increase the stability of a drawing process. Boric acid and a borate may be added to the spinning solution.

The coagulation solution is not particularly limited as far as it has a coagulation function to the spinning solution. From the standpoint of the process efficiency and the cost, a coagulation solution using water as a solvent is preferably used. Specifically, an aqueous solution of a salt having a dehydration function, such as sodium sulfate (Glauber's salt), ammonium sulfate and sodium carbonate. The concentration of the aqueous solution may be selected from 100 g/L or more to the saturated concentration, and is preferably as close as possible to the saturated concentration since such a solution has a high dehydration and coagulation function. From the standpoint of the efficiency of the process and the cost, a saturated aqueous solution coagulation bath is preferably used. A method can also be preferably employed, in which a spinning solution containing boric acid in an amount of about from 0.1 to 3% by weight is extruded into an alkaline coagulating bath containing sodium hydroxide and so on. The temperature of the coagulation bath is preferably from 20 to 70°C, and particularly preferably from 30 to 50°C. The thread released from the coagulation bath is then wet-drawing and drying to easily obtain a spinning base thread.

In the case where fibers of 50 d or less are produced, because such fibers have high toughness and are difficult to suffer stick, they are preferably produced by wet discharging a spinning solution obtained by dissolving PVA in a solvent into a coagulation bath. Preferably, the following method can be exemplified.

As a solvent used in production of the fiber, an organic solvent dissolving PVA is preferably used, and a polar solvent, such as dimethyl sulfoxide (DMSO), dimethyl formamide and dimethyl imidazoline, and a polyhydroxy alcohol, such as glycerin and ethylene glycol, are exemplified. A mixture of two or more of them and a mixture of water and them can also be used. Among these solvents, DMSO is a preferred solvent since it can dissolve PVA at a relatively low temperature to prevent heat degradation and coloring of the PVA solution. Since DMSO has a relatively high freezing temperature, it is preferred to decrease the coagulation temperature of the coagulation bath by adding methanol in a low concentration. The concentration of PVA of the spinning solution varies depending on the polymerization degree of PVA and the species of the solvent, and is generally from 2 to 30% by weight, and preferably from 3 to 20% by weight.

As the coagulation bath, an organic solvent having a coagulation function to PVA is used. There is no limitation as far as those having a coagulation function to PVA, for example, an alcohol, such as methanol and ethanol, and a ketone, such as acetone and methyl ethyl ketone. Among these, methanol is preferred since it is cheap, it has a relatively moderate coagulation function and can easily form a uniform fine crystal structure. In order to obtain fibers having a high tenacity in the invention, the solvent for the solution may be contained in the coagulation bath. The content of the solvent of the solution varies depending on the species of the organic solvent having a coagulation function, and is preferably from 10 to 50% by weight, and more preferably from 15 to 45% by weight, so that an uniform gel can be easily obtained.

The temperature of the coagulation bath is preferably 20°C or less, and when it exceeds 20°C, non-uniform coagulation occurs by preceding phase separation of the coagulated thread to become opaque, and fibers having a high tenacity cannot be obtained. It is more preferred that the temperature of the coagulation bath is 15°C or less, and particularly 10°C or less, from the standpoint of obtaining a uniform coagulated thread.

The spinning method in the invention may be the dry and wet spinning method in which an air gap layer is present between the nozzle and the coagulation bath or the gel spinning method, and it is preferred to employ the wet spinning method, in which the nozzle is in direct contact with the coagulation bath from the standpoint of performance of the fibers and efficiency of the spinning process.

The resulting bundle of coagulated threads is soaked in an extraction bath to wash and remove the solvent of the solution contained in the bundle of coagulated threads. The extraction bath is preferably constituted by an organic solvent having a coagulation function. The bundle of threads is subjected to wet thermal drawing at from 2.5 to 5.5 times. The bundle of threads is dried to obtain a spinning base thread.

The spinning base thread can be obtained by various method as described above, and it is preferred that it is obtained by subjecting wet thermal drawing at a high temperature to proceed orientation and crystallization from the standpoint of improving the performance of fiber. Particularly, in the case where the method described above is employed, in which the spinning solution containing an organic solvent is used, fibers having excellent mechanical characteristics can be obtained since sticking of the fibers is difficult to occur. Specifically, fibers having a tenacity of 9 g/d or more can be obtained.

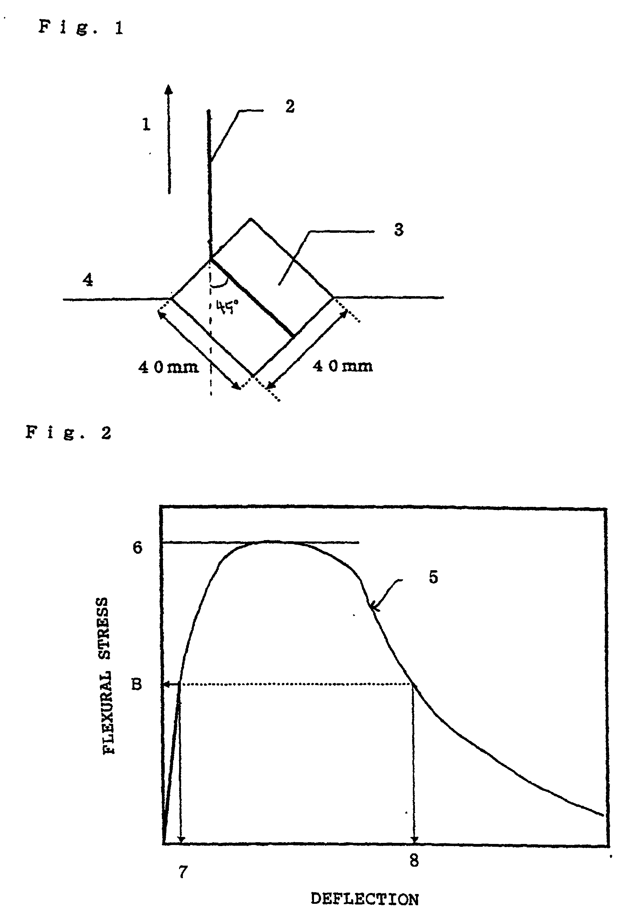

The method of thermal drawing of the fibers is not particularly limited, and a non-contact type or contact type heater, a hot air furnace, an oil bath and a high temperature steam may be employed. Among these, it is preferably conducted in a drawing furnace of a hot air type over a period of time of about from 20 seconds to 3 minutes, in which the thermal drawing may be conducted in two or more steps by controlling the temperature to plural stages. The thermal drawing is preferably conducted in such a manner that the drawing temperature is 200°C or more, and more preferably from 220 to 250°C, and the total drawing ratio is from 8 to 25 times, and more preferably from 9 to 18 times.

In the case where the general fibers having a high tenacity and a low elongation are produced, drawing has generally be conducted to about from 80 to 90%. In the invention, the drawing is preferably conducted to from 50 to 75% from the standpoint in that fibers having a relatively high elongation are produced.

The elongation of the fibers can also be adjusted by, for example, subjecting the drawn fibers to a suitable shrinkage treatment. Preferably, the fibers are maintained in a heating furnace having a temperature higher than the drawing heating furnace by from 2 to 5°C under the condition in that the fibers are suitably relaxed (i.e., including the shrinking amount), and then the heat treatment of the fibers is conducted under the conditions, to increase the elongation. The elongation can be increased by increasing the shrinking amount. In general, the shrinking ratio is preferably from 3 to 20%, and more preferably from 5 to 15%.

By increasing the drawing ratio, the tenacity of the fibers is increased but their elongation is decreased. By increasing the shrinking amount, the elongation is increased but the mechanical performance is decreased. Therefore, it is preferred that the various conditions (such as the discharging amount of the spinning solution, the drawing condition and the shrinking condition) are suitably adjusted to obtain the desired fibers.

While the elongation can be increased by increasing the shrinking ratio, there are cases in that the flexing tenacity utilization factor cannot be increased by increasing the elongation depending on the conditions, such as the species of the polymer, the degree of polymerization, the spinning method, the spinning conditions, the drawing conditions (drawing ratio and drawing temperature) and the shrinking treatment temperature. Therefore, these conditions should be suitably adjusted to obtain the desired flexing tenacity utilization factor.

The fibers of the invention have excellent performance as a reinforcing material for a kneaded and formed article. The volume fraction of the fibers can be suitably determined, and it is preferably 0.01% by volume or more based on the amount of the matrix, more preferably 0.1% by volume or more, and particularly preferably 0.5% by volume or more, from the standpoint of reinforcement, and is preferably 10% by volume or less, more preferably 5% by volume or less, and particularly preferably 4% by volume or less, from the standpoint of uniform dispersibility.

Because the fibers of the present invention are excellent in reinforcing effect, the reinforcing effect can be considerably increased by adding an extremely small amount of them.

A kneaded and formed article excellent in various performances such as toughness can be obtained by mixing the reinforcing material of the invention. As the specific forming method, for example, the spray forming method, the injection forming method, the pressure forming method, the vibrating forming method, the forming method utilizing vibration and pressure, the centrifuge forming method, the winding forming method, the vacuum forming method and the extrusion forming method can be employed. Of course, an article (formed article) obtained by applying as a material for plastering is included in the invention.

The term kneading and forming used in the invention means a method in which a matrix in the form of mud and the fibers are uniformly mixed in the system, in which water is present, and the mixture is formed into the desired shape by the forming method described above, and is clearly distinguished from the paper-manufacturing method conventionally employed. In the invention, superior effects can be exhibited even in the case of a mixture obtained by mixing the solid content and water in a ratio about from 100/15 to 100/60, particularly from 100/15 to 100/40, i.e., a mixture having a lower water content and thus lower flowability than that for the paper-manufacturing method.

The hydraulic material used in the invention is not particularly limited, and examples thereof include gypsum, gypsum slag and magnesia, with cement being preferably used. A representative example of cement is portland cement, and portland blast cement, fly ash cement, alumina cement and mixtures of them may be used.

The reinforcing material of the invention also exhibits an excellent reinforcing effect in mortar and concrete containing an aggregate that is liable to be damaged and is difficult to exhibit the reinforcing effect.

As a fine aggregate, river sand, sea sand, land sand, crushed sand and crushed stone are employed, and as a coarse aggregate, cobblestone and crushed stone can be employed. Furthermore, artificial light-weight aggregate and filler may be mixed, and specific examples thereof include slag and limestone, as well as foamed perlite, foamed obsidian, calcium carbonate, vermiculite and Shirasu balloon. Furthermore, a flowing agent, An air entraining agent (AE), superplasticizer, a water reducing agent, a thickener, a water holding agent, a aterproof agent, an expanding agent, a accelerating agent and a retarding agent can be used in combination as additives.

The fine aggregate referred in the invention means an aggregate, 95% by weight of which passes through a sieve having an opening diameter of 5 mm, and the coarse aggregate means an aggregate, from 0 to 10% by weight of which passes through a sieve having an opening diameter of 5 mm.

The composition of the hydraulic material is not particularly limited. In the system mixed with a coarse aggregate, fibers having a fineness of from 300 to 6,000 d, more preferably from 3,000 to 5,000 d, are preferably mixed since they are stiff and their mechanical characteristics are difficult to be lost, and further they have good dispersibility. The fibers preferably have an aspect ratio of 35 or more, more preferably 40 or more, and preferably 100 or less, more preferably 80 or less. By using such fibers, the formation of the first crack is effectively suppressed. In order that the reinforcing material exhibits a bridging effect in the system mixed with a coarse aggregate, the length of the reinforcing material should be long to a certain extent. In the case of fibers having a large diameter, a high reinforcing effect can be obtained since excellent dispersibility can be obtained even when the length of fibers is made certainly long.

In the case where the main object is to improve the impact resistance after the formation of the first crack, it is preferred that the system substantially does not contain a coarse aggregate so that the transmission of stress is made smooth, and the transmission of stress can be further effectively attained by mixing fibers having a fineness of from 5 to 100 d and an aspect ratio of from 20 to 500, so as to obtain further excellent effect. In the case where a coarse aggregate is mixed, there are cases where the transmission of stress is inhibited, and the fibers having a small diameter are damaged on kneading. The fibers preferably have a fineness of 10 d or more, more preferably 12 d or more, and preferably 50 d or less, more preferably 30 d or less. The aspect ratio of the fibers is preferably 60 or more, more preferably 70 or more, and particularly preferably 80 or more, and is preferably 400 or less. Of course, the fibers may be used in combination with other fibers having a large diameter.

Suitable examples of the composition include the composition of the specimen used in the measurement of a toughness coefficient in the Example. Specifically, in the system containing no coarse aggregate (mortar), a composition comprising from 80 to 120 parts by weight of cement and from 40 to 80 parts by weight of water is preferred, to which other additives may be added. For example, at least one of from 80 to 120 parts by weight of siliceous sand, from 10 to 50 parts by weight of silica fume, from 0.1 to 5 parts by weight of methyl cellulose and from 0.1 to 5 parts by weight of a superplasticizer is preferably mixed, and more preferably all of them are mixed.

In the system containing a coarse aggregate (concrete), a composition comprising from 80 to 120 parts by weight of cement, from 120 to 200 parts by weight of water and from 200 to 400 parts by weight of a coarse aggregate is preferred, to which other additives, such as a water reducing agent, may be added. It is further preferred that from 20 to 100 parts by weight of a fine aggregate is mixed.

As specific examples of the kneaded and formed article of the invention, it can be used as all the cement or concrete formed articles and the secondary products thereof, such as a slate plate, a pipe, a wall panel, a floor panel, a roof plate, a partition wall, a paving material, a tunnel lining, a slope protection material and a concrete factory product. Furthermore, other than the cement products described above, the kneaded and formed article of the invention can be applied to a structural material, an interior and exterior finishing material and a construction material. Furthermore, it can be used as a mortar for plastering, and also can be used as a grounding of a machine, a pressure vessel of a nuclear reactor and a vessel of a liquefied natural gas.

The present invention will be described in more detail with reference to the following example.

[fineness d]

The weight of the constant thread length of the resulting fiber-like substance was measured, and the apparent fineness was calculated at n = 5 to obtain the average value. The fineness of which could not be measured by the measurement of the weight of the constant thread length (fiber with a small denier), the fineness was measured with a vibroscope.

[density g/cm$^3$]

The density was measured by the density gradient tube method using carbon tetrachloride and n-hexane as solvents (measuring atmosphere: 20°C).

[tenacity g/d, Young's modulus g/d, elongation %]

The fiber to be measured was allowed to stand under the conditions of a temperature of 20°C and a relative humidity of 65% for 24 hours, and a single fiber was subjected to the measurement of a fiber tenacity at a gauge length of 20 cm and a Young's modulus at a tensile rate of 10 cm/min by an tensile tester "Autograph manufactured by Shimadzu Corp."
The elongation was calculated by the equation:

$$\frac{\text{single fiber breaking elongation (cm)}}{\text{gauge length (cm)}} \times 100$$

When the length of the fibers was shorter than 20 cm, the measurement was conducted with the length as long as possible of the sample as the gauge length.

[flexing tenacity utilization factor %]

The fibers to be measured were set vertically in a form of 40 mm square and a mortar of cement/siliceous sand/water = 1/1/0.4 (weight basis) was cast into the mold (embedded length of fiber: 40 mm), followed by sufficient vibration. The mortar was cured at a condition of 25 °C and 65%RH for 24 hours and then in water, to obtain a hardened article. Ordinary portland cement (Ordinary portland cement produced by Asano Cement Co., Ltd.) was used as the cement, and silica #4000 (Blaine value: 4,000 cm$^2$/g, produced by Keiwa Rozai Co., Ltd.) was used as the siliceous sand.
The fibers embedded in the formed article were subjected to a tensile test at a flexing angle of 45° to a longitudinal direction of the embedded fiber at a tensile rate of 0.5 mm/min by using a tensile tester (Autograph AG-5000B manufactured by Shimadzu Corp.), to obtain the breaking stress (g/d) as the flexing tenacity.
The ratio (%) of flexing tenacity (g/d) to the fibers tenacity (g/d) was measured and designated as the flexing tenacity utilization factor.

[pull-out resistance N/mm$^2$]

Ordinary portland cement (Ordinary portland cement produced by Asano Cement Co., Ltd.) was dry mixed with the same amount of silica #4000 (Blaine value: 4,000 cm$^2$/g, produced by Keiwa Rozai Co., Ltd.) in a Hobart mixer for 2 minutes, and water was added in such an amount that the water/cement ratio was 0.4, followed by wet mixing for 2 minutes. The mixture was cast on a polyethylene film having a thickness of 0.2 mm in an aluminum vat and screeded to a thickness of from 5 to 10 mm. Partition flames made of thin wood (3 cm x 3 cm) were embedded thereto, and one fiber was embedded in one flame, respectively.
The embedding of the fibers was conducted in the following manner. A mark is applied to a needle at the depth, into which the fibers were expected to be inserted into the matrix, and the needle was inserted into the matrix in the direction perpendicular to the surface of the matrix. The fibers were inserted into the matrix to that depth (to the bottom of the matrix layer in the cases other than fiber having thin denier). In the case where a fiber is too fine to be embedded by the method described above, it can be embedded as follows:

First a fiber is set in a form in advance
Secondly mortar is cast in a form.
Thirdly the mortar after curing is thinned by grinding if necessary. The embedded length of the fiber can be suitably changed, and it is preferred that the embedded length is from 1 to 2 mm or less in the case of fiber of 100 d or less.

After inserting the fiber, the mortar in the aluminum vat was sealed in a plastic bag, and was subjected to the first curing at 50°C for 20 hours, and then further cured in a room at 20 °C for 21 days kept in the plastic bag. After curing, paint was sprayed on exposed part of the fiber, which enabled the measurement of the embedded length Lb after the pull-out test. Then the mortar was demolded and separated into several specimens. A pull-out test was conducted at a rate of 2 mm/min by using Autograph (5000-AGB manufactured by Shimadzu Corp.) to obtain a load-displacement curve.

The maximum load Pa (kgf) was read from the record of load/displacement of pull-out, and the pull-out resistance was calculated by the following equation. The test was conducted for 5 samples (n = 5) except for the case where the fiber was broken on the pull-out test, and the average value of the resulting values was calculated. The embedded length Lb (mm) was a value obtained by measuring the embedded length after the pull-out test with a unit of 1/10 mm, and the girth L (mm) was calculated from the average fineness Dr (denier) and the fiber density A (g/cm$^3$) by the equation $0.2(Dr \cdot \pi/(90 \cdot A))^{1/2}$ on the assumption that the cross section of the fiber was circle.

$$\text{Pull-out resistance (N/mm}^2) = 9.8 \cdot Pa/(L \times Lb)$$

[toughness index N/mm$^2$ (systems containing no fiber reinforcing material of 100 d or less)]

193 kg of ordinary portland cement, 113 kg of a fine aggregate (pit sand from Kisarazu), 611 kg of a coarse aggregate (crushed stone #6 from Hachioji, maximum diameter: 13 mm), 350 kg of water and 0.88 kg of a water reducing agent (Pozzolys #70) were put in a bi-axial forced mixer, and kneaded for 1 minute to produce plain concrete. Fibers were added to the plain concrete in an amount of 0.75% by volume, followed by kneading for 1 minute, and a sample (prism of 10 cm x 10 cm x 40 cm) was produced by using the resulting slurry according to the standard of Japan Society of Civil Engineering JSCE-F552 "Method of making specimens for measuring Strength and Toughness of Steel Fiber Reinforced Concrete". The specimen was subjected to curing at room temperature of 20°C and a humidity of 65%, followed by demolding, and then cured in water at 20°C for 28 days. The resulting specimen was measured for toughness index by third point bending test by using a multi-function tester manufactured by Shimadzu Corp. according to the standard of Japan Society of Civil Engineering JSCE-G522 "Testing Method of Flexural Strength and Toughness of Steel Fiber Reinforced Concrete". The higher the toughness index of the formed article is, the more excellent the toughness (impact resistance) is.

The flexural strength was calculated by $P \cdot l/(b \cdot h^2)$, and the toughness index was calculated in such a manner that the area Tb under the load-deflection curve from a deflection of zero to 1/150 of the span was obtained, and the toughness coefficient was obtained by $(Tb/Stb) \cdot (l/bh^2)$.

P represents the maximum load shown by the tester (N), l represents the span length (cm), b represents the width of the rupture cross section (cm), h represents the height of the rupture cross section (cm), and Stb represents the deflection to 1/150 of the span (cm).

[toughness index (systems containing fiber reinforcing material of 100 d or less), flexural load-deflection test]

The composition of the hardened product used in the test was as follows. Specifically, ordinary portland cement (ordinary portland cement produced by Chichibu Onoda Cement Corp.), siliceous sand #7 (produced by Toyo Materan Corp.), silica fume (produced by EFACO Corp.), methyl cellulose (Himethollose 90SH30000 produced by Shin-Etsu Silicone Co., Ltd.), an AE superplasticizer (SP-8N produced by Pozzolys Corp.), and PVA based fiber (produced by Kuraray Co., Ltd.) were used.

| | |
|---|---|
| Cement | 100 parts by weight |
| Siliceous sand #7 | 100 parts by weight |
| Silica fume | 0.4 part by weight |
| Methyl cellulose | 1.5 parts by weight |
| AE superplasticizer | 0.75 part by weight |
| water | 60 parts by weight |

The PVA based fibers were added to the matrix having the composition described above in an amount of 3% by volume.

The composition was mixed and kneaded in an omnimixer (OM-5 produced by Chiyoda Giken Co., Ltd.) and then poured into a forming flame of 4 cm x 4 cm x 16 cm, followed by being allowed to stand at room temperature for 24 hours, and then subjected to curing in water at room temperature for 6 days, to prepare a sample. In the case where the hardened article was larger than the size of 4 cm x 4 cm x 16 cm, the sample was cut into the same size for evaluation of performance. The toughness index ($I_{20}$) was measured according to ASTM C1108-94. The higher the toughness index of the formed article is, the more excellent the toughness (impact resistance) is.

Three-point flexural test was conducted by using the same sample and by using Autograph produced by Shimadzu Corp. at a span length of 150 mm and a load application speed of 0.5 mm/min, so as to prepare a flexural load-deflection curve.

The point at which the load exhibits the maximum value as far as the load and the deflection exhibit a proportional relationship on the bending load-deflection curve was designated as the point of formation of the first crack, and the deflection A and the load B at this point were read from the curve. The deflection C showing the load B was similarly read. The load-deflection curves were prepared for three or more specimens, to measure A, B and C, and the evaluation was conducted by the average values thereof. The maximum flexural load was read from the curve, and the average value thereof was obtained.

In the case where two or more points, at which the load B was exhibited after the formation of the first crack, were present, the point exhibiting the largest deflection was adopted as the point for C. The larger the C/A is, the more excellent the vibration resistance is.

[Example 1]

PVA having an average polymerization degree of 1,700 measured by viscosity method and a saponification degree of 99.8% by mol was added to DMSO to prepare a spinning solution (PVA concentration: 18% by weight). It was then extruded from a round nozzle having a hole diameter of 0.2 mm and a number of holes of 100 into a coagulation bath having a temperature of 5°C and a weight ratio of methanol/DMSO of 70/30, to conduct wet spinning. The resulting bundle of coagulated threads was subjected to drawing of 3 times in a wet drawing bath having a mixing weight ratio of methanol/DMSO of 95/5 and a temperature of 50°C, and then DMSO was extracted and removed by making into contact with a countercurrent of methanol, followed by drying. The threads were subjected to thermal drawing at 230°C to a total drawing ratio of 10 times, and then subjected to a shrinking treatment of 10% at a temperature of 235°C, so as to produce fibers. A polyethyleneoxide oily agent ("VOS513" produced by Takemoto Oil and Fat Co., Ltd.) was applied to the resulting fibers in an amount of 0.5% by weight based on the fibers, and the fibers were cut into the length shown in Table 1, to obtain a reinforcing material. The results obtained are shown in Table 1.

[Example 2]

A reinforcing material was obtained in the same manner as in Example 1 except that the drawing ratio was 14 times and the shrinking ratio was 7.5%.

[Example 3]

PVA having an average polymerization degree of 1,700 measured by viscosity method and a saponification degree of 99.9% by mol and boric acid were added to water to prepare a spinning solution (PVA concentration: 16.5% by weight, boric acid concentration: 1.8% by weight based on PVA). It was then extruded from a round nozzle having a hole diameter of 0.2 mm and a number of holes of 2,000 into a coagulation bath at a temperature of 40°C and having a Glauber's salt concentration of 380 g/L and a sodium hydroxide concentration of 12 g/L, to conduct wet spinning. The resulting bundle of threads was subjected to roller-streching of 2 times ,washing with water to decrease boric acid concentration to 0.4% by weight based on PVA, wet drawing of 1.5 times in a wet drawing bath of saturated Glauber's salt at a temperature of 75°C, followed by drying. The threads were subjected to thermal drawing at 230 °C to a total drawing ratio of 14.5 times. A polyethyleneoxide oily agent ("VOS513" produced by Takemoto Oil and Fat Co., Ltd.) was applied to the resulting fibers in an amount of 0.5% by weight based on the fibers, and the fibers were cut into the length shown in Table 1, to obtain a reinforcing material. The results obtained are shown in Table 1.

[Examples 4 and 5]

PVA having an average polymerization degree of 3,300 measured by viscosity method and a saponification degree of 99.9% by mol and boric acid were added to water to prepare a spinning solution (PVA concentration: 12% by weight, boric acid concentration: 1.8% by weight based on PVA). It was then extruded from a round nozzle having a hole diameter of 0.2 mm and a number of holes of 2,000 into a coagulation bath at a temperature of 65°C and having a Glauber's salt concentration of 350 g/L and a sodium hydroxide concentration of 12 g/L, to conduct wet spinning. The resulting bundle of threads was subjected to drawing of 2 times by roller drawing and then subjected to wet drawing of 1.5 times in a bath of saturated Glauber's salt at a temperature of 75°C, followed by drying. The threads were further subjected to thermal drawing at 238 °C to make the total drawing ratio of 21 times. The threads were then subjected to a shrinking treatment of 4.4% at 242 °C , to prepare fiber. A polyethyleneoxide oily agent ("VOS513" produced by Takemoto Oil and Fat Co., Ltd.) was applied to the resulting fibers in an amount of 0.5% by weight based on the fibers, and the fibers were cut into the length shown in Table 1, to obtain a reinforcing material. The results obtained are shown in Table 1.

[Example 6]

PVA having an average polymerization degree of 1,700 measured by viscosity method and a saponification degree of 99.9% by mol was added to water to prepare a spinning solution (PVA concentration: 41% by weight). It was then extruded from a round nozzle having a hole diameter of 0.1 mm and a number of holes of 2,000 into the air at a temperature of 95°C, and dried to the completely dried state. The resulting bundle of threads was subjected to thermal drawing of 12 times in a drawing furnace of hot air type at 243°C, and then subjected to a shrinking treatment of 3.0% at 248°C, to prepare fibers. A polyethyleneoxide oily agent ("VOS513" produced by Takemoto Oil and Fat Co., Ltd.) was applied to the resulting fibers in an amount of 0.5% by weight based on the fibers, and the fibers were cut into the length shown in Table 1, to obtain a reinforcing material. The results obtained are shown in Table 1.

[Example 7]

The same procedures as in Example 6 were repeated except that the oily agent was not applied to the fiber.

[Example 8]

PVA having an average polymerization degree of 1,700 measured by viscosity method and a saponification degree of 99.8% by mol was added to DMSO to prepare a spinning solution (PVA concentration: 18% by weight). It was then extruded from a round nozzle having a hole diameter of 0.4 mm and a number of holes of 100 into a coagulation bath having a temperature of 5°C and a weight ratio of methanol/DMSO of 70/30, to conduct wet spinning. The resulting bundle of coagulated threads was subjected to drawing of 3 times in a wet drawing bath having a mixing weight ratio of methanol/DMSO of 95/5 and a temperature of 50°C, and then DMSO was extracted and removed by making into contact with a countercurrent of methanol, followed by drying. The threads were subjected to thermal drawing at 230°C to a total drawing ratio of 14 times, and then subjected to a shrinking treatment of 7.5% at a temperature of 235°C, so as to produce fibers. A polyethyleneoxide oily agent ("VOS513" produced by Takemoto Oil and Fat Co., Ltd.) was applied to the resulting fibers in an amount of 0.5% by weight based on the fibers, and the fibers were cut into the length shown in Table 1, to obtain a reinforcing material. The results obtained are shown in Table 1.

[Examples 9 and 10 and Comparative Examples 1 and 2]

Reinforcing materials were obtained in the same manner as in Example 2 except that the cut length was changed. In Comparative Example 1, the aspect ratio was too small to obtain sufficient reinforcing effect. In Comparative Example 2, the aspect ratio was so large that dispersibility was decreased and sufficient reinforcing effect could not be obtained. The results obtained are shown in Table 1.

[Comparative Example 3]

The same procedures were conducted as in Example 1 except that "RMU182" produced by Kuraray Co., Ltd. was used as the fiber. Because the diameter of the fibers was too small, to form fiber balls on kneading, and also because the flexing tenacity utilization factor was too small, the reinforcing effect was low. The pull-out resistance in Comparative Example 3 could not be measured as the fiber was broken before it was pulled out. This is because the adhesion of the reinforcing material to the matrix was high, and the fibers were liable to be broken due to its small diameter. The results obtained are shown in Table 1.

[Comparative Example 4]

A reinforcing material was obtained in the same manner as in Example 1 except that the drawing ratio was changed to 14 times and the shrinking ratio was changed to 0%. The sufficient reinforcing effect could not be obtained because the elongation and the flexing tenacity utilization factor were too low. The results obtained are shown in Table 1.

[Comparative Example 5]

A reinforcing material was obtained in the same manner as in Example 1 except that the drawing ratio was changed to 13.5 times and the shrinking ratio was changed to 0%. The sufficient reinforcing effect could not be obtained because the elongation and the flexing tenacity utilization factor were too low. The results obtained are shown in Table 1.

[Example 11]

PVA having an average polymerization degree of 1,700 measured by viscosity method and a saponification degree of 99.9% by mol was subjected to control in humidity to have a water content of 52%, and was melted and liquefied in a screw extruder having a barrel temperature of 140°C. It was then extruded from a round nozzle having a hole diameter of 3.0 mm into the air at 95°C to dry to the completely dried state. The resulting threads was subjected to dry thermal drawing of 11 times in a drawing furnace of hot air type at 233°C, and then subjected to a shrinking treatment of 10% at a temperature of 235°C, so as to produce fibers. The resulting fiber was cut into a length shown in Table 2 to obtain reinforcing material. The results obtained are shown in Table 2.

[Example 12]

PVA having an average polymerization degree of 1,700 measured by viscosity method and a saponification degree of 99.9% by mol was subjected to control in humidity to have a water content of 52%, and was melted and liquefied in a screw extruder having a barrel temperature of 140°C. It was then extruded from a round nozzle having a hole diameter of 4.0 mm into the air at 95°C to dry to the completely dried state. The resulting threads was subjected to dry thermal drawing of 12 times in a drawing furnace of hot air type at 235°C, and then subjected to a shrinking treatment of 10% at a temperature of 238°C, so as to produce fiber. The resulting fibers were cut into a length shown in Table 2 to obtain reinforcing material. The results obtained are shown in Table 2.

[Example 13]

A reinforcing material was obtained in the same manner as in Example 11 except the whole diameter of the round nozzle was changed from 3.0 mm to 4.0 mm. The results obtained are shown in Table 2.

[Examples 14 to 16]

Reinforcing materials were obtained in the same manner as in Example 12 except that the shrinking rate was changed to 15% in Example 14, and it was changed to 10% in Examples 15 and 16, and the resulting fibers were cut into the length shown in Table 2. The results are shown in Table 2.

[Comparative Examples 6 to 8]

Reinforcing materials were obtained in the same manner as in Example 12 except that the shrinking ratio was changed to 0% (Comparative Example 6), 20% (Comparative Example 7) and 30% (Comparative Example 8). Because the elongation and the flexing tenacity utilization factor in Comparative Example 6 was too low, and also because the relationship between the elongation and the flexing tenacity utilization factor is not within the suitable range in Comparative Examples 7 and 8, sufficient reinforcing effects cannot be obtained for the fiber group a and fiber group b. In this case, as a result, the toughness of the molded article was poor. The results obtained are shown in Table 2.

[Comparative Example 9]

A reinforcing material was obtained in the same manner as in Example 12 except that the drawing ratio was changed to 13 times, the temperature, at which the shrinking treatment was conducted, was changed to 245°C, and the shrinking ratio was changed to 15%. Because the flexing tenacity utilization factor was too low, sufficient reinforcing effects cannot be obtained for the fiber group a and fiber group b. In this case, as a result, the toughness of the formed article was poor. The results obtained are shown in Table 2.

[Comparative Example 10]

A reinforcing material was obtained in the same manner as in Example 13 except that the drawing ratio was changed to 13 times, and the shrinking ratio was changed to 15%. Because the elongation and the flexing tenacity utilization factor were not in the suitable ranges, sufficient reinforcing effects cannot be obtained for the fiber group a and fiber group b. In this case, as a result, the toughness of the formed article was poor. The results obtained are shown in Table 2.

[Comparative Examples 11 and 12]

Reinforcing materials were obtained in the same manner as in Example 12 except for changing the cut length. Because the aspect ratio was too small in Comparative Example 11, the performance of the formed article was low. Because the aspect ratio was too large in Comparative Example 12, the dispensability of the fiber was lowered, and the performance of the formed article was low. The result obtain are shown in Table 2.

The reinforcing material of the invention exhibited the superior reinforcing effect in the fiber group a and the fiber group b, and formed articles excellent in toughness were obtained. Among these, the formed articles obtain in Examples 12 to 14 were excellent in toughness. A formed article having a high maximum flexing stress but having a low toughness brings about a problem in that because the formed article is low in energy absorption function, it is weak against an impact-type stress, and because the possible demoldation amount is small, the breakage is liable to proceed abruptly. However, even when a stress is applied to a formed article having a high toughness, it absorbs the stress and exhibits superior impact resistance.

The formed articles obtained in Examples shown in Table 1 (particularly in Examples 1 to 5) are extremely high in fiber tenacity, and exhibit an excellent reinforcing effect in both the fiber group a and the fiber group b. Thus, the formed articles are excellent in seismic resistance, in that the reinforcing effect is maintained after the formation of the first crack, and have excellent performance. Particularly in Examples 2, 4 and 5, because the fiber breaking strength is high, a further excellent effect is exhibited.

[Figure 1]

It is a schematic diagram showing the shape of the hydraulic formed article used in the measurement of flexing tenacity utilization factor, and the tensile direction thereof.

[Figure 2]

It is a schematic graph showing an example of a deflection-flexural load curve of a kneaded and formed article.

(1)     TENSILE DIRECTION
(2)     REINFORCING MATERIAL
(3)     MOLDED HYDRAULIC ARTICLE
(4)     FIXED PART
(5)     DEFLECTION-FLEXURAL STRESS CURVE
(6)     MAXIMUM FLEXURAL STRESS
(7)     FORMATION OF FIRST CRACK
(8)     DEFLECTION C

Table 1

| | Constitution of reinforcing material | | | | | | | | Kneaded and formed article | | | | | Maximum flexural stress |
| | Fineness | Fiber length | AP value | Tenacity | Modulus of elasticity | Elongation | Flexing tenacity utilization | Releasing resistance | Toughness coefficient | A | B | C | C/A | |
|---|---|---|---|---|---|---|---|---|---|---|---|---|---|---|
| Example 1 | 40 | 10 | 152 | 9.6 | 227 | 13.0 | 53 | 8 | 25.1 | 0.28 | 161 | 3.9 | 13.4 | 295 |
| Example 2 | 26 | 8 | 151 | 12.5 | 282 | 9.3 | 50 | 8 | 32.8 | 0.28 | 165 | 4.7 | 16.8 | 320 |
| Example 3 | 15 | 6 | 150 | 9.2 | 170 | 11.5 | 53 | 8 | 28.2 | 0.28 | 153 | 4.2 | 15.0 | 290 |
| Example 4 | 14 | 9 | 234 | 16.2 | 410 | 6.5 | 52 | 8 | 31.9 | 0.29 | 175 | 4.6 | 15.9 | 335 |
| Example 5 | 14 | 15 | 390 | 16.2 | 410 | 6.5 | 50 | 8 | 32.3 | 0.30 | 173 | 6.5 | 21.7 | 322 |
| Example 6 | 6 | 6 | 235 | 9.4 | 200 | 8.2 | 50 | 8 | 28.6 | 0.28 | 165 | 3.3 | 11.0 | 270 |
| Example 7 | 6 | 6 | 235 | 9.4 | 200 | 8.2 | 50 | 11 | 29.7 | 0.28 | 167 | 2.8 | 10.0 | 290 |
| Example 8 | 75 | 6 | 66 | 11.5 | 270 | 9.4 | 49 | 8 | 27.5 | 0.26 | 151 | 3.1 | 11.9 | 242 |
| Example 9 | 26 | 2 | 38 | 12.5 | 282 | 9.3 | 50 | 8 | 24.7 | 0.27 | 185 | 3.0 | 11.1 | 250 |
| Example 10 | 26 | 22 | 414 | 12.5 | 282 | 9.3 | 50 | 8 | 27.5 | 0.29 | 184 | 3.2 | 11.0 | 260 |
| Comparative Example 1 | 26 | 0.5 | 9 | 12.5 | 282 | 9.3 | 50 | 8 | 15.9 | 0.26 | 140 | 1.9 | 7.3 | 205 |
| Comparative Example 2 | 26 | 30 | 564 | 12.5 | 282 | 9.3 | 50 | 8 | 19.1 | 0.26 | 135 | 2.1 | 8.4 | 240 |
| Comparative Example 3 | 2 | 3 | 214 | 16.7 | 343 | 5.4 | 20 | impossible to measure | 11.9 | 0.27 | 129 | 1.5 | 5.6 | 193 |
| Comparative Example 4 | 18 | 6.5 | 148 | 14.3 | 261 | 5.3 | 34 | 8 | 19.9 | 0.29 | 144 | 2.0 | 6.9 | 263 |
| Comparative Example 5 | 34 | 9 | 148 | 10.4 | 394 | 4.6 | 31 | 8 | 18.5 | 0.28 | 170 | 2.2 | 9.3 | 270 |

Table 2

| | Constitution of reinforcing material | | | | | | | | Toughness coefficient of formed article |
|---|---|---|---|---|---|---|---|---|---|
| | Fineness | Fiber length | AP value | Tenacity | Modulus of elasticity | Elongation | Flexing tenacity utilization | Releasing resistance | |
| Example 11 | 200 | 12 | 81 | 8.5 | 250 | 7.2 | 49 | 7 | 38.4 |
| Example 12 | 4,592 | 30 | 42 | 6.7 | 210 | 8.4 | 46 | 7 | 46.8 |
| Example 13 | 1,010 | 20 | 61 | 7.5 | 235 | 7.3 | 48 | 7 | 45.5 |
| Example 14 | 4,800 | 30 | 41 | 7.0 | 189 | 11.4 | 50 | 7 | 47.0 |
| Example 15 | 4,010 | 20 | 30 | 6.7 | 215 | 8.8 | 45 | 7 | 41.5 |
| Example 16 | 4,010 | 80 | 121 | 6.7 | 215 | 8.8 | 45 | 7 | 43.0 |
| Comparative Example 6 | 4,124 | 30 | 44 | 6.8 | 269 | 4.3 | 10 | 7 | 28.0 |
| Comparative Example 7 | 5,137 | 30 | 40 | 6.1 | 164 | 14.2 | 51 | 7 | 35.7 |
| Comparative Example 8 | 5,848 | 30 | 37 | 5.7 | 146 | 22.8 | 52 | 7 | 30.7 |
| Comparative Example 9 | 4,370 | 30 | 44 | 6.7 | 235 | 7.3 | 28 | 7 | 27.4 |
| Comparative Example 10 | 980 | 20 | 61 | 8.0 | 240 | 5.5 | 18 | 7 | 23.1 |
| Comparative Example 11 | 4,592 | 4 | 7 | 6.7 | 210 | 8.4 | 46 | 7 | 21.6 |
| Comparative Example 12 | 4,592 | 550 | 778 | 6.7 | 210 | 8.4 | 46 | 7 | 12.5 |

## EP 0 950 645 B1

**Claims**

1. A reinforcing material for a kneaded and formed hydraulic material comprising fibers having a fineness of 5 d or more, an aspect ratio of from 10 to 500, a breaking tenacity of 5 g/d or more, an elongation (A) of from 6 to 20%, a flexing tenacity utilization factor (B) of 35% or more, and (B) ≥ 4(A), wherein the flexing tenacity utilization factor (B) is the ratio (%) of flexing tenacity (g/d) to the fibers tenacity (g/d).

2. The reinforcing material as claimed in claim 1, wherein said fibers are polyvinyl alcohol based fibers.

3. The reinforcing material as claimed in claim 1 or 2, wherein said fibers have a fineness of from 300 to 6,000 d and an aspect ratio of from 35 to 100.

4. The reinforcing material as claimed in claim 1 or 2, wherein said fibers have a fineness of from 5 to 100 d and an aspect ratio of from 20 to 500.

5. A kneaded and formed article comprising a hydraulic material having three-dimensionally and uniformly dispersed therein, followed by forming, a reinforcing material comprising fibers having a fineness of 5 d or more, an aspect ratio of from 10 to 500, a breaking tenacity of 5 g/d or more, an elongation (A) of from 6 to 20%, a flexing tenacity utilization factor (B) of 35% or more, and (B) ≥ 4(A), wherein the flexing tenacity utilization factor (B) is the ratio (%) of flexing tenacity (g/d) to the fibers tenacity (g/d).

6. The kneaded and formed article as claimed in claim 5, wherein said fibers are polyvinyl alcohol based fibers.

7. The kneaded and formed article as claimed in claim 5 or 6, wherein said fibers have a fineness of from 300 to 6,000 d and an aspect ratio of from 35 to 100.

8. The kneaded and formed article as claimed in claim 5 or 6, wherein said fibers have a fineness of from 5 to 50 d and an aspect ratio of from 20 to 500.

**Patentansprüche**

1. Verstärkungsmaterial für ein geknetetes und geformtes hydraulisches Material, umfassend Fasern, die eine Feinheit von 5 d oder mehr, ein Seitenverhältnis von 10 bis 500, eine Bruchfestigkeit von 5 g/d oder mehr, eine Dehnung (A) von 6 bis 20 % und einen Biegefestigkeits-Ausnutzungsfaktor (B) von 35 % oder mehr aufweisen, wobei (B) ≥ 4(A) ist, und wobei der Biegefestigkeits-Ausnutzungsfaktor (B) das Verhältnis (%) der Biegefestigkeit (g/d) zur Faserfestigkeit (g/d) ist.

2. Verstärkungsmaterial nach Anspruch 1, wobei die Fasern Fasern auf der Basis von Polyvinylalkohol sind.

3. Verstärkungsmaterial nach Anspruch 1 oder 2, wobei die Fasern eine Feinheit von 300 bis 6.000 d und ein Seitenverhältnis von 35 bis 100 aufweisen.

4. Verstärkungsmaterial nach Anspruch 1 oder 2, wobei die Fasern eine Feinheit von 5 bis 100 d und ein Seitenverhältnis von 20 bis 500 aufweisen.

5. Gekneteter und geformter Gegenstand, der ein hydraulisches Material umfasst, das vor dem Formen ein darin dreidimensional und einheitlich dispergiertes Verstärkungsmaterial aufweist, das Fasern umfasst, die eine Feinheit von 5 d oder mehr, ein Seitenverhältnis von 10 bis 500, eine Bruchfestigkeit von 5 g/d oder mehr, eine Dehnung (A) von 6 bis 20 % und einen Biegefestigkeits-Ausnutzungsfaktor (B) von 35 % oder mehr aufweisen, wobei (B) ≥ 4 (A) ist, und wobei der Biegefestigkeits-Ausnutzungsfaktor (B) das Verhältnis (%) der Biegefestigkeit (g/d) zur Faserfestigkeit (g/d) ist.

6. Gekneteter und geformter Gegenstand nach Anspruch 5, wobei die Fasern Fasern auf der Basis von Polyvinylalkohol sind.

7. Gekneteter und geformter Gegenstand nach Anspruch 5 oder 6, wobei die Fasern eine Feinheit von 300 bis 6.000 d und ein Seitenverhältnis von 35 bis 100 aufweisen.

**8.** Gekneteter und geformter Gegenstand nach Anspruch 5 oder 6, wobei die Fasern eine Feinheit von 5 bis 50 d und ein Seitenverhältnis von 20 bis 500 aufweisen.

**Revendications**

**1.** Matériau de renforcement pour matériau hydraulique malaxé et moulé comprenant des fibres ayant une finesse de 5 d ou plus, un rapport de forme allant de 10 à 500, une ténacité de rupture de 5 g/d ou plus, un allongement (A) allant de 6 à 20%, un facteur d'utilisation de la ténacité de flexion (B) de 35% ou plus, et (B) $\geq$ 4 (A), dans lequel le facteur d'utilisation de la ténacité de flexion (B) est le rapport (%) de la ténacité de flexion (g/d) à la ténacité des fibres (g/d).

**2.** Matériau de renforcement selon la revendication 1, dans lequel lesdites fibres sont des fibres à base d'alcool polyvinylique.

**3.** Matériau de renforcement selon la revendication 1 ou 2, dans lequel lesdites fibres ont une finesse allant de 300 à 6000 d et un rapport de forme allant de 35 à 100.

**4.** Matériau de renforcement selon la revendication 1 ou 2, dans lequel lesdites fibres ont une finesse allant de 5 à 100 d et un rapport de forme allant de 20 à 500.

**5.** Article malaxé et moulé comprenant un matériau hydraulique ayant tridimensionnellement et uniformément dispersé en lui, suivi d'un moulage, un matériau de renforcement comprenant des fibres ayant une finesse de 5 d ou plus, un rapport de forme allant de 10 à 500, une ténacité de rupture de 5 g/d ou plus, un allongement (A) allant de 6 à 20%, un facteur d'utilisation de la ténacité de flexion (B) de 35% ou plus, et (B) $\geq$ 4 (A), dans lequel le facteur d'utilisation de la ténacité de flexion (B) est le rapport (%) de la ténacité de flexion (g/d) à la ténacité des fibres (g/d).

**6.** Article malaxé et moulé selon la revendication 5, dans lequel lesdites fibres sont des fibres à base d'alcool polyvinylique.

**7.** Article malaxé et moulé selon la revendication 5 ou 6, dans lequel lesdites fibres ont une finesse allant de 300 à 6000 d et un rapport de forme allant de 35 à 100.

**8.** Article malaxé et moulé selon la revendication 5 ou 6, dans lequel lesdites fibres ont une finesse allant de 5 à 50 d et un rapport de forme allant de 20 à 500.

Fig. 1

Fig. 2